# EUROPEAN PATENT SPECIFICATION

(11) **EP 1 216 092 B1**
(45) Date of publication and mention of the grant of the patent: **30.03.2005**
(21) Application number: 99939588.2
(22) Date of filing: 23.08.1999
(51) Int. Cl.: B01J 21/06, B01J 21/08, C01G 23/047, C01B 17/04

(54) **SILICON-CONTAINING TITANIUM DIOXYDE, METHOD FOR PREPARING THE SAME AND CATALYTIC COMPOSITIONS THEREOF**
MODIFIZIERTES TITANDIOXID, VERFAHREN FÜR SEINE HERSTELLUNG UND KATALYTISCHE ZUSAMMENSETZUNGEN DERSELBEN ENTHALTENDE
DIOXYDE DE TITANE CONTENANT DU SILICIUM, SON PROCEDE DE PREPARATION ET COMPOSITIONS CATALYTIQUES DONT IL FAIT PARTIE

(43) Date of publication of application: 26.06.2002
(73) Proprietor: Rotem Amfert Negev Ltd., 77051 Ashdod (IL)
(72) Inventor: MIRSKY, Ya'acov, 84363 Beer-Sheva (IL); GORLOVA, Marina N., Kirishi, 187100 (RU)
(74) Representative: Winckels, Johannes Hubertus F.
(86) International application number: PCT/IL1999/000457
(87) International publication number: WO 2001/014054

(56) References cited:
- EP-A- 0 595 078
- EP-A- 0 668 100
- EP-A- 0 826 410
- WO-A-96/09117
- WO-A-99/39825
- US-A- 3 887 494
- US-A- 5 162 283
- US-A- 5 703 272

## Description

### Field of the Invention

The present invention relates to titanium dioxide. More particularly, the invention relates to a novel modified titanium dioxide, a method for its preparation, a catalyst comprising said novel titanium dioxide and various uses thereof.

### Background of the invention

Titanium dioxide, TiO₂ an important compound having a wide range of utilities, in particular as a catalyst, is generally produced by drying or calcining titanium hydroxide, Ti(OH)₄ (also referred in the art as titanyl hydroxide). Titanium hydroxide itself may be prepared by several methods, using different types of titanium compounds.

Three crystalline forms of titanium dioxide are known in the art: Anatase, Rutile and Brookite. The first crystalline forms, Anatase, is considered favorable for the purpose of catalytic applications (US Patent No. 4,388,288 and US Pat. No.4,422,958).

The effectiveness of catalytic activity of titanium dioxide, like many other catalysts, is associated with its porous structure. Catalysts having well developed mesoporous and macroporous structure permit not only a high rate of chemical reaction, but also a high rate of diffusion of the reagents into the granules of catalysts, as well as a high rate of diffusion of the reaction products out of the granules of catalyst.

Many catalytic processes using titanium dioxide are carried out at elevated temperatures. Under severe conditions, the porous structure of the catalyst may partially collapse, thereby causing a significant reduction of the active surface area, which results in decreasing the catalytic activity of titanium dioxide. A partial transformation of the favorable crystalline form, Anatase, into the less favorable form, Rutile, may be observed during such processes. Quantitatively, the thermal stability of the catalyst may be measured by the change in the specific surface area of a sample subjected to calcination (see, for example, French patent application No. 2,621,577 and European Patent Application No. 0311,515).

Since titanium dioxide is a relatively expensive material, it is most desirable that such a catalyst would possess a prolonged effective period of use. The art has addressed the technical problem of improving the thermal stability of titanium dioxide, in order to allow this catalyst to maintain, as much as possible, its porous structure also under severe conditions. The art has particularly attempted to improve the thermal stability of titanium dioxide by combining it with various additives. Useful agents for this purpose may be selected from the group of aluminum, sodium, potassium, calcium or other chlorides, nitrates and powdery silica.

The art has particularly focused in combining titanium dioxide with silicon dioxide, by means of co-precipitation of titanium hydroxide and hydrous silica (silica gel) from an aqueous solution.

Journal of Catalysis 105, p. 511-520 (1987) discloses the co-precipitation of mixed titanium-silicon hydroxide from a solution containing a mixture of TiCl₄ and SiCl₄. The resulting product is described as a support for a nickel catalyst.

Precipitation of titanyl sulfate in the presence of a powdery dry silica (SYLOID- -74) was carried out in order to prepare samples containing 20%, 40% and 80% by weight TiO2 and investigations with these precipitates as catalyst for selective catalytic reduction of nitrogen oxides, were described in Applied Catalysis A, General 139, 1996, pages 175-187.

Journal of Catalysis, 153, p.165-176 (1995) discloses another method involving the co-precipitation of the mixed titanium-silicon dioxide, using the alkoxide sol-gel method and organic compounds of titanium and silicon as the starting materials, (tetra-isopropoxy-titanium and tetra-methoxysilicon correspondingly). The alkoxide sol-gel method is responsible for the formation of mixed titania-silica aerogels. These porous particles were also tested in the reaction of epoxidation of olefins (Journal of Catalysis 153, 177-189, 1995),

Crystalline titanium silicates having specific adsorption and catalytic properties, prepared by the co-precipitation method, were also described in Advances in Catalysis, Vol. 41, 253-327, 1996. A method of preparing a highly porous amorphous titania or titania/silica material from a starting material comprising titanium diisopropoxide is disclosed in US 5,162,283. A mixture of titania with a binder of silica and alumina is disclosed as a support for a metal catalyst in WO 99/39825.

Another approach, attempted by the art to modify titanium dioxide via the combination with silica, is described in Applied Catalysis A, General 139, p. 175-187 (1996) . According to this publication, titanium hydroxide is precipitated from an aqueous solution in the presence of powdery dry silica (SYLOID -74). The resulting particles exhibit selective catalytic properties for the reduction of nitrogen oxides (NOx).

The review given above emphasizes that there is a growing need to provide a modified titanium dioxide having improved thermal stability.

It is an object of the present invention to provide a method for preparing improved titanium dioxide, which results in the formation of a novel product having enhanced thermal stability and a well developed mesoporous and macroporous structure.

It is an object of the present invention to provide such a method involving the introduction of relatively small amounts of silicon into titanium dioxide structure.

### Summary of the invention

The inventors have found an efficient method for producing silicon-containing titanium dioxide with improved thermal stability. The method is based on a reaction of either titanium hydroxide or titanium dioxide with particles of an aqueous silica sol (a colloidal solution of silica). The silicon-containing titanium hydroxide obtained is subjected to a heat treatment, resulting in formation of an improved titanium dioxide possessing enhanced thermal stability under alkaline conditions. This method is radically different from the methods accepted in the art involving co-precipitation of mixed titanium and silicon hydroxides.

The inventors have also surprisingly found that the preferred starting material, for the above mentioned treatment with silica sol, is a precipitate of titanium hydroxide which is obtained from an aqueous solution containing inorganic salts of titanium, following a gradual adjustment of the pH in said solution. This method of precipitation yields titanium dioxide having improved structural features, such as high surface area and a well-developed mesoporous structure. When this precipitate is reacting with silica sol, as explained above, a thermally stable titanium dioxide, having a high surface and developed mesoporous structure, is obtained.

Thus, in one aspect, the present invention is directed to a method for preparing thermally stable, silicon-containing titanium dioxide, which method comprises the steps of providing a starting material that is titanium hydroxide or titanium dioxide, reacting said starting material with a silica sol, under alkaline conditions which prevent the coagulation of silica particles in said sol, to obtain silicon-containing titanium hydroxide or silicon-containing titanium dioxide, and, in the case of silicon-containing titanium hydroxide, heat treating the same to obtain silicon-containing titanium dioxide.

According to the present invention, titanium hydroxide or titanium dioxide prepared by various methods known in the art may be used as the starting material, generally in the form of a wet cake, an aqueous suspension, a dough or in a dried form. According to a preferred embodiment of the present invention, the starting material is a precipitate of titanium hydroxide, obtained by a precipitation method that comprises the following steps:
a) providing an acidic aqueous solution containing inorganic salts of titanium and, if required, increasing the pH of the solution to a value above 0.02 but below the value at which precipitation of titanium hydroxide occurs, by introducing into said solution a first alkaline agent;
b) dissolving in said solution a precursor of an alkaline agent, and causing said precursor to generate said second alkaline agent and thereby to precipitate titanium hydroxide in the solution; and
c) separating and washing said precipitate of titanium hydroxide.

The solution according to step a) comprises inorganic salts of titanium which are preferably sulfate salts. The concentration of titanium in said solution, calculated in terms of TiO₂, is in the range between 20 to 250 g/l.

Preferably, the first alkaline agent optionally used in step a) is selected from the group consisting of ammonia, hydroxides and/or carbonates of alkali metals or alkaline earth metals.

According to a particularly preferred embodiment of the present invention, a precursor of alkaline agent used in step b) is urea, which, upon heating, is decomposed to generate ammonia. The ammonia produced increases the pH of the solution thereby driving the precipitation of titanium hydroxide.

The separation of the precipitate according to step c) is accomplished by acceptable liquid/solid separation techniques, for example by filtration. Preferably, following the separation, the precipitate is washed, and used as the starting material in the preparation of a thermally stable, silicon-containing titanium dioxide.

The inventors have found that the novel method of precipitation described above, which constitutes another aspect of the present invention, is important in determining the catalytic properties of the final titanium dioxide. More specifically, this precipitation method imparts the final titanium dioxide a high surface area and a well developed mesoporous structure. These properties are of great importance in the field of catalysts, involving titanium dioxide use. The precipitate of titanium hydroxide, obtained by the method of precipitation described above, may be converted, if desired, into titanium dioxide without a reaction with the silica sol. Due to its structural properties, the resulting silicon-free titanium dioxide is an effective catalyst which can be used in low-temperature catalyzed reactions.

The silica sol used according to the present invention is a colloidal solution containing silica particles, the diameter of said particles being usually in the range of between 1 and 100nm. The concentration of the silica sol is between 1 and 40%, and preferably between 3 and 20% (w/w), calculated as SiO₂. Preferably, a basic silica sol, stabilized with cations such as Na+, K+ or NH₄+ is used.

Preferably the titanium hydroxide or titanium dioxide starting material is treated with an alkaline agent, before its reaction with the silica sol, to adjust the pH of said starting material to a value above 6.0, and preferably between 8 to 10. The reaction between the titanium hydroxide or titanium dioxide and the silica sol is accomplished under alkaline conditions, wherein the coagulation of the silica particles is prevented and the stability of the sol is maintained. The process is carried out at a temperature between room temperature and the boiling point of the liquid phase of the sol, preferably within the range of 70 to 100°C.

Another aspect of the present invention is directed to a thermally stable titanium dioxide containing not more than 18% silicon, calculated in terms of SiO₂ on dry basis. The said titanium dioxide is a single phase, having essentially the same composition at different points, as determined by the EDAX method and has a specific surface area greater than 300m²/g, and a specific pore volume which is of at least 0.30 cc/g for pores having a diameter less than 100 nM, and which is thermally stable to the extent that it maintains the crystalline structure of the Anatase form after calcinations. By the term "single phase" is meant a substance consisting of one homogeneous phase, namely, no separate phases of TiO₂ and SiO₂ are observed in said substance.

Another aspect of the present invention is directed to a catalyst, comprising the thermally stable titanium dioxide of the present invention and a silica filler. Optionally, the catalyst may further comprise a binder.

Preferably, the silica filler present in the catalyst is selected from the group of natural silica, namely, diatomaceous earth, optionally treated with an acid to remove impurities therefrom, precipitated silica or silica hydrogels, preferably free of any sodium or potassium contamination.

The binder is optional according to the present invention, and is preferably selected from the group of colloidal-solutions of silica or hydrogels of silicic acid.

**In the Drawings:**
Figure 1 is the X-ray diffraction diagram of a novel titanium dioxide prepared according to the present invention and calcined at 950oC for 1 hour (example 18)
Figure 2 is the X-ray diffraction diagram of a commercially available titanium dioxide UNITi 908 calcined at 950°C for 1 hour.
Figure 3 is the X-ray diffraction diagram of a novel titanium dioxide prepared according to the present invention and calcined at 950°C for 1 hour (example 23).

### Detailed description of the invention

The present invention provides a method for preparing thermally stable, silicon-containing titanium dioxide, which method comprises the steps of providing a starting material that is titanium hydroxide or titanium dioxide, reacting said starting material with a silica sol, under alkaline conditions which prevent the coagulation of silica particles in said sol, to obtain silicon-containing titanium hydroxide or silicon-containing titanium dioxide, and, in the case of silicon-containing titanium hydroxide, heat treating the same to obtain silicon-containing titanium dioxide.

As explained above, the preferred starting material according to the present invention is a precipitate of titanium hydroxide, obtained by the following method:
a) providing an acidic aqueous solution containing inorganic salts of titanium and, if required, adjusting the pH of the solution to a value above 0.02 but below the value at which precipitation of titanium hydroxide occurs, by introducing into said solution a first alkaline agent;
b) dissolving in said solution a precursor of an alkaline agent, and causing said precursor to generate said second alkaline agent and thereby to precipitate titanium hydroxide in the solution; and
c) separating and washing said precipitate of titanium hydroxide.

In the following description, the preferred embodiments of said precipitation method will be detailed.

The solution according to step a) comprises inorganic salts of titanium, which are preferably sulfate or chloride salts, most preferably sulfate salts. Examples of particularly suitable solutions are solutions of ammonium titanyl sulfate (NH₄)₂TiO(SO₄)₂, which is a commercially available compound, or solutions containing titanyl sulfate and sulfuric acid. These solutions of titanyl sulfate and sulfuric acid are either commercially available (UNITi 992™ produced by KEMIRA) or may be prepared by dissolving available titanium hydroxides or titanium dioxides (UNITi 908™, FINNTiS-230™) in a concentrated solution of sulfuric acid (70% w/w) .

The concentration of titanium sulfate, in the solution used according to step a) of the precipitation method, calculated in terms of TiO₂, is in the range of between 10 and 250 g/l and preferably between 40 and 150 g/l.

The pH of a solution containing titanyl sulfate and sulfuric acid is very low. The pH of the solution is adjusted to a value in the range between 0.02 and the value causing the precipitation of titanium hydroxide by introducing into said solution a first alkaline agent which is selected from the group consisting of ammonia, hydroxides and carbonates of alkali metals or alkaline earth metals. Most preferably, the pH of the solution is adjusted in step b} to a value in the range between 0.8 to 1.7 using ammonia as the alkaline agent. When the starting solution is a solution containing (NH₄)₂TiO(SO₄)₂, the pH is already within the required range and usually no adjustment will be required.

A key feature of the method of precipitation, as provided by the present invention, is that the pH adjustment is carried out in a controlled manner. Initially the pH of the solution is increased to a value somewhat below the pH at which precipitation occurs. This may be achieved by using a first alkaline agent. The precipitation is then accomplished by introducing into the solution a precursor of a second alkaline agent. The first and the second alkaline agents may be the same or different. Following homogeneous dispersion of said precursor, the precursor is allowed to generate the second alkaline agent, which actually drives the precipitation of titanium hydroxide. According to a particularly preferred embodiment of the present invention, the second alkaline agent precursor is urea, which, upon heating, is decomposed to generate the second alkaline agent itself, i.e. ammonia. The ammonia thus produced increases the pH of the solution, thereby driving the precipitation of titanium hydroxide.

The weight ratio between the quantity of urea, added to the solution according to step b) of the precipitation method, and the quantity of titanium present in the solution (in terms of titanium dioxide) is preferably in the range of between 0.3 to 11.0, more preferably in the range 2-4. Subsequent to the dissolution of the urea, the solution is heated to an elevated temperature, preferably in the range between 90 to 105°C, although other temperatures may also be applicable, whereby ammonia is produced. Most of the titanium hydroxide precipitates quite rapidly, i.e., in several minutes, but preferably, the solution is maintained at said elevated temperature for an additional period of time, to allow a complete precipitation of said titanium hydroxide and concurrently to remove residues of sulfuric acid, which accompany the precipitate. The exact duration of step b) depends on the titanium salt content of the solution, the pH of the solution before the addition of urea, the amount of urea added and the temperature employed. Typically, the duration of step b) is between 1.5-4.0 hours. The value of the pH at the end of this step is above 6.0, usually in the range between 6.2-6.8. The precipitate is separated from the liquid phase, by acceptable methods such as filtration, decantation and centrifugation, and is subsequently washed, preferably by demineralized water.

The precipitate of titanium hydroxide obtained by the precipitation method described above is considered as the preferred starting material for producing silicon-containing titanium dioxide, having enhanced thermal stability, according to the present invention. Other titanium hydroxide or titanium dioxide preparations, obtained by a variety of methods known in the art, may be also used as the starting material. For example, titanium hydroxide wet cake precipitated according to the procedure disclosed in EP 722905 Al (after the washing but without the addition of potassium hydroxide and phosphoric acid) and titanium hydroxide or titanium dioxide prepared according to US 4, 929, 586 (before the vanadyl oxalate addition). Additional-applicable starting materials are the produced by KEMIRA: UNITi 902™, FINNTi S-140™ and FINNTi-150™.

The reaction between the titanium hydroxide or titanium dioxide starting material and the silica sol should be accomplished preferably under conditions ensuring the stability of the sol, namely under alkaline conditions, thereby preventing the coagluation of the silica particles. For this reason, titanium hydroxide or titanium dioxide starting materials, typically in the form of an aqueous suspension, a wet cake, dough or a dry material, is mixed with an alkaline agent before it is contacted with the silica sol. The alkaline agent is preferably selected from the group of an aqueous solution of ammonia, urea, sodium hydroxide or potassium hydroxide. The pH of the resulting mixture comprising the titanium hydroxide or titanium dioxide starting materials and the alkaline agent should be between 6 to 11, and preferably between 8 to 10. Subsequently, the silica sol is introduced into said mixture, maintaining its stability under said alkaline conditions.

The silica sol used according to the present invention is a colloidal solution containing silica particles. It is known that the inner part of said particles consists essentially of dehydroxylated silica, while silicon atoms located on the outer surface of the particles are hydroxylated. Generally, said silica sols contain cations to neutralize the negative charge of the silica particles. The preferred cations are sodium, potassium and ammonium, the latter being most preferred. Methods of preparation of silica sol, for example, those employing a cation exchange method, are well known in the art.

The concentration of the silica sol used according to the present invention is between 1 and 40%, and preferably between 3 and 20% (w/w), calculated as SiO2. The quantity of the silica sol contacting with titanium hydroxide or titanium dioxide starting material is such that the weight ratio between silicon and titanium, in terms of their dioxides, is preferably in the range of between 0.01 and 0.3, more preferably in the range of between 0.03 and 0.15. It has been surprisingly found that when said ratio is less than 0.1, substantially all the quantity of silica present in the solution is consumed by the titanium hydroxide or titanium dioxide starting material. The inventors believe that some Ti - O - Si chemical bonds are formed resulting in a reinforcement of the structure of the final titania.

The titanium hydroxide or titanium dioxide is contacted with the silica sol at a temperature in the range between ambient temperature and the boiling point of the liquid phase, preferably in the range 70-100°C. The rate of interaction between the silica sol and the hydroxylated surface of titanium hydroxide or titanium dioxide is temperature dependent, said rate of interaction increasing with the elevation of the temperature.

Another aspect of the present invention is directed to titanium dioxide containing not more than 18% silicon, calculated in terms of SiO₂ on a dry basis, which is a single phase, having essentially the same composition at different points, as determined by the EDAX method, which has a specific surface area greater than 300 m²/g, and a specific pore volume which is of at least 0.30 cc/g for pores having a diameter less than 100 nm, and which is thermally stable to the extent that it maintains the crystalline structure of the Anatase form after calcinations.

The silicon-containing titanium dioxide according to the present invention is thermally stable, as apparent from the following tests:
i) following calcination at 800°C for 3 hours, it is capable of retaining a surface area above 28 m²/g, preferably above 50 m²/g, wherein the silicon content, calculated as SiO₂, is 2%, or above 90 m²/g, preferably above 200 m²/g, wherein the silicon content, calculated as SiO₂, is 18%;
ii) following a hydrothermal treatment at 400°C for 5 hours with a mixture containing 90% by volume water vapor and 10% air, it is capable of retaining a surface area above 120 m²/g, preferably above 250 m²/g, wherein the silicon content, calculated as SiO₂, is 18%.

The present invention also provides a catalyst, comprising the thermally stable titanium dioxide of the present invention and a silica filler. Optionally, the catalyst may further comprise a binder.

Preferably, the silica filler present in the catalyst is selected from the group includes both natural silica, namely, diatomaceous earth, optionally treated with an acid to remove impurities therefrom, and precipitated silicas or silica hydrogels, preferably free of sodium or potassium contamination.

In a preferred embodiment of the present invention, the filler is a purified diatomaceous earth, which is obtained after a treatment with an acid, preferably HCl or H₂SO₄, at a temperature in the range of between 20 and 100°C for about 0.5 to 5 hours. Subsequent to a washing stage, diatomaceous earth, substantially free of impurities such as sodium, potassium, calcium, magnesium, aluminum and acid residues, is obtained. Then this diatomaceous earth can be used as a filler according to the present invention.

The binder is optional according to the present invention, and is preferably selected from the group of colloidal solutions of silica or hydrogels of silicic acid.

It is known that the efficiency of a catalyst used in a chemical reaction is dependent on the rate of diffusion of the reaction reagents into the catalyst particulates and the rate of diffusion of the reaction products therefrom. The silica filler is important in determining the macroporous structure of the catalyst. The preferred filler according to the present invention is a diatomaceous earth having a porous structure consisting essentially of macropores, the diameter of which being about 1 micrometer. Precipitated silica with low surface area and without a developed microporous structure and silica hydrogel with similar properties can also be used as fillers.

The catalyst according to the present invention is preferably prepared as follows. The silicon-containing titanium dioxide (a dried or calcined material) or its silicon-containing titanium hydroxide precursor (in the form of a wet cake, suspension or a partially dried cake) is mixed with the filler material (in the form of a wet cake, partially dried cake, or a completely dried material), and, optionally with a binder. Generally the mixing is facilitated using suitable mechanical means for pastes mixing and malaxating. Optionally, appropriate amounts of water may be added into said mixture in order to obtain a homogeneous dough. The addition of water, however, may not be necessary in cases where the water content of the titanium hydroxide and the filler is sufficient to prepare a paste with the required properties. In some cases the paste has to be dried to a certain extent in the process of dough preparation.

The resulting mixture is shaped into extrudates, beads, tablets, honeycombs or into blocks with any desired shape. The shaped forms obtained above are dried at a temperature in the range of between 50°C-300°C, and are subsequently calcined at a temperature in the range of between 300°C-800°C.

The mixing of the active ingredient with the filler, and optionally, with the binder, yields a mixture which is highly homogeneous, and which may be easily shaped into desirable granules or blocks, having high hardness.

The addition of binder, preferably a sol of silicic acid promotes higher hardness of the granulated material.

Preferably, the sol is introduced into the mixture containing the active ingredient and the filler in an amount not higher than 20% by weight (calculated in terms of SiO₂). The resulting wet granules may be kept in air for some time or may be dried immediately. The drying process can be conducted at a wide range of temperatures, such as between ambient temperature and 300°C, using different types of dryers. Generally, the wet granules are first dried at a temperature in the range between 100°C-150°C, to increase their hardness to a degree allowing their loading into a calcination kiln, at a temperature of about 400°C for about 1 to 10 hours. The temperature of calcination may be increased up to 800°C.

The catalyst prepared according to the present invention possesses high thermal and hydrothermal stability and improved mesoporous and macroporous structure. The catalyst is characterized by improved hardness, and because of the excellent properties of active ingredient, relatively small quantities thereof are required to impart the catalyst excellent activity, in comparison to catalysts known in the art.

The novel catalyst of the present invention can be used in various processes, and particularly in processes involving sulfur recovery and in chemical reactions involving sulfur-containing compounds, such as, for example, the reaction of hydrogen sulfide with sulfur dioxide (known as Claus reaction). The following reactions may also be catalyzed using said catalyst: hydrolysis of carbonyl sulfide and carbon disulfide, direct oxidation of hydrogen sulfide with air and tail gases treatment (for example "Sulfreen" process).

The catalyst according to the present invention may be used in other chemical reactions, in which titanium dioxide is commonly used: the oxidation of carbon monoxide, the reduction of nitrogen oxide with ammonia, the complete oxidation of organic compounds, etc.

The present invention also provides a method for preparing a titanium dioxide catalyst, which method comprises providing an initial material chosen from among titanium dioxide or titanium hydroxide prepared according to the method for preparing a thermally stable, silicon-containing titanium dioxide of the present invention and containing not more than 18% silicon, calculated in terms of SiO₂ on a dry basis, mixing said initial material with a silica filler, mixing, and either optionally adding water or drying to a certain extent, to form a homogeneous dough, shaping said dough into forms of a desired shape, drying said forms and calcining said forms.

All the above description and examples have been provided for the purpose of illustration, and are not intended to limit the invention in any way.

### Examples.

Methods of analyses: The modified titanium dioxide and catalysts obtained were analyzed by the following tests for the dry samples as well as for samples calcined at a temperature between 250°C to 900°C:
- determination of the specific surface area, using the so called "1 point method" with Analyzer 4200 (Leeds and Northrup),
- specific surface area and specific adsorption pore volume, as determined with a Coulter Instrument SA 3100,
- macropore structure, as determined by generally accepted mercury intrusion method, and
- the respective chemical analyses, carried out using known tests.
Specific tests of catalytic properties are described in corresponding examples

### Preparation A

### Preparation of a solution containing dissolved ammonium titanyl sulfate salt

An amount of 2 kg of solid ammonium titanyl sulfate salt containing about 20% of TiO₂ and 27% water,was dissolved in 4 l of demineralized water at room temperature overnight, using a moderate stirring. The non-dissolved portion was separated by filtration. The resulted solution contained 80 g/l titanyl sulfate (calculated as TiO₂) which corresponds to the formula of the respective double salt (NH₄)₂TiO(SO₄)₂ and an amount of ammonium sulfate. The pH of this solution was of 0.8.

### Preparation B

### Preparation of an acidic titanyl sulfate solution

An acidic titanyl sulfate solution, which is compositionally similar to a commercially available acid titanyl sulfate solution, known as "UNITi 992", produced by Kemira Pigments Inc., was prepared as follows:
An amount of 9.8 kg of a commercial titanium dioxide (hydrolysate) UNITi 908, having a loss on ignition of 19.6% by weight (at 1000°C), was dissolved in an amount of 43.8 kg of boiling sulfuric acid having a concentration of 70% by weight. After cooling, an amount of 1 l of this solution was diluted with an equal volume of demineralized water. The resulted solution,having a concentration of 123 g/l TiO2, was used in examples 3 to 5. The same solution, but with another concentration of titanium dioxide was used in examples 6 to 18 (see table 2).

### Example 1

### Preparation of silicon-containing titanium dioxide

- Starting material:: the solution of ammonium titanyl Sulfate.
- Silica sol:: basic silica sol containing ammonium cations.

Preparation the precipitate of titanium hydroxide : An amount of 175 g of urea was added to 500 ml of the solution prepared according to preparation A, at room temperature and the resulting solution was heated and maintained at a temperature in the range of between 97-102C for about 3 hours. The precipitated titanium hydroxide was separated from the mother liquor and washed with demineralized water.

Preparation the silicon-containing titanium dioxide: The resulting wet cake of titanium hydroxide was suspended in a basic silica sol, prepared from a commercial sodium silicate solution as known in the art, the pH being increased to about 8.5 by treating with an aqueous solution of ammonia.

In this process an amount of about 41 g of the basic sol was mixed with the titanium hydroxide cake, corresponding to a SiO2 :TiO2 weight ratio of about 0.03. The mixture was maintained at about 90°C for 30 minutes under moderate stirring. The residual quantity of silicon in solution was negligible. The wet cake of titanium hydroxide was converted into titanium dioxide, by drying first at 110°C for about 2 hours and further at about 250°C for half hour. The properties of the product obtained are given in Table 1 below, in comparison to a commercially available titanium dioxide.

### Example 2

### Preparation of silicon-containing titanium dioxide

- Starting material:: the solution of ammonium titanyl sulfate.
- Silica sol:: basic silica sol containing ammonium cations.

The titanium dioxide was prepared as in Example 1, but the amount of the basic silica sol used corresponded to a weight ratio SiO2 :TiO2 to 0.05. The data on the specific surface areas of the 'prepared sample and the respective thermal stability, compared with a commercially available titanium dioxide, known as UNITi 908, are given in Table 1.

**Table 1**

| Product | Specific surface area of initial titanium dioxide, m²/g | Weight ratio SiO₂:TiO₂ | Specific surface area of samples treated with basic silica sol, m²/g | | |
|---|---|---|---|---|---|
| | | | Dried Sample | ! After calcination ! for 3 hours, at ! a temperature of | |
| | | | | 500°C | 700°C |
| Example 1 | 392 | 0.03 | 436 | 207 | 113 |
| Example 2 | 399 | 0.05 | 448 | 283 | 144 |
| UNITi 908 | 328 | | | 93 | 24 |

### Examples 3 to 5

### Preparation of silicon-containing titanium dioxide

- Starting material:: the acidic titanyl sulfate solution.
- Silica sol:: basic silica sol stabilized with different cations.

Preparation of a precipitate of titanium hydroxide: 1 liter of the acidic titanyl sulfate solution obtained by preparation B was gradually neutralized with 481 grams of an aqueous solution of ammonia, containing about 25% by weight of ammonia. The temperature of the starting solution was 22oC, but, as the heat of the neutralization releases, it may by increased to about 35-55°C. To the above solution, an amount of 780 ml of demineralized water was added and the resulting solution had a pH of 0.90. To the above mentioned solution, an amount of 409 g of urea was added and then heated to 98oC and maintained at this level for about two and half hours (see Table 2). The precipitated titanium hydroxide was separated from the mother liquor and washed with demineralized water. The resulting wet cake was divided into three portions, used in the Examples 3, 4 and 5. Each wet cake sample was diluted with demineralized water, obtaining a suspension which had a concentration of 10% (calculated as TiO₂).

Preparation of silicon-containing titanium dioxide: three basic silica sol was prepared by a method known in the art, using different cations for the sol stabilization; in Example 3: sodium, in Example 4: potassium and in Example 5: ammonium. In each Example, the amount of basic sol used, calculated as % of SiO₂ to TiO₂ was 10% (by weight).

The three different basic silica sols were mixed separately with the above mentioned three samples of suspension and the resulting mixtures were heated to about 90°C and maintained at this temperature for about 1 hour. In each case, substantially all the quantities of silica were consumed by the titanium hydroxide. The resulted precipitates were separated from the liquid phase by filtration and converted into titanium dioxides by a thermal treatment at four different temperatures: 110°C, 500°C, 700°C and 900°C. The conditions of preparation are given in table 2.

**Table 2**

| Ex. No. | Concentration of titanium hydroxide in the suspension (as % TiO₂) | Concentration of silica sol (as g/l SiO₂) | Cationic Form of silica sol | Quantity of silica sol (in terms of % SiO₂ in TiO₂) | |
|---|---|---|---|---|---|
| | | | | introduced | consumed by Titanium hydroxide |
| 3 | 10 | 3.0 | Na⁺ | 10.0 | 9.9 |
| 4 | 10 | 3.0 | K⁺ | 10.0 | 9.9 |
| 5 | 10 | 2.9 | NH₄⁺ | 10.0 | 9.9 |

In table 3, values of specific surface area are detailed for titanium dioxide prepared according to examples 3 to 5, before and after the reaction with silica sol.

**Table 3**

| Ex. No. | Specific surface Area of titanium dioxide obtained without the treatment with silica sol (precipitate dried at 110°C) | Specific surface area of titanium dioxide obtained after the treatment with basic silica sol, m²/g | | | | |
|---|---|---|---|---|---|---|
| | | Dried (110°C) | ! After calcination ! for 3 hours, at ! a temperature (°C) of | | | |
| | | | ! 500 | 700 | 800 | 900 |
| 3 | 416 | 442 | | | 141 | 65 |
| 4 | 416 | 434 | | | 139 | 65 |
| 5 | 416 | 453 | 327 | 277 | 164 | 110 |

It is apparent that silica sol stabilized with a variety of cations can be used in accordance with the present invention, most preferred being silica sol stabilized with ammonium cation.

### Examples 6 to 17

### Preparation of silicon-containing titanium dioxide

- Starting material:: the acidic titanyl sulfate solution.
- Silica sol:: basic silica sol stabilized with ammonium cations.

In these Examples, an acidic titanyl sulfate solution, according to preparation B, was used as a starting material.

Preparation of a precipitate of titanium hydroxide: The exact conditions for each example (dilution of the starting solution, pH adjustment, amount of urea added and duration of heating of the solution to generate the ammonia) are detailed in table 4.

**Table 4**

| Ex. No. | Concentration of TiO₂ in the starting solution | pH before the addition of urea | Weight ratio Urea:TiO₂ | Duration of heating (hours) |
|---|---|---|---|---|
| 6 | 125 | 1.10 | 3.6 | 2.5 |
| 6A | 125 | 1.10 | 3.6 | 2.5 |
| 7 | 128 | 0.80 | 2.0 | 2.5 |
| 8 | 128 | 1.67 | 2.0 | 5.5 |
| 9 | 128 | 1.67 | 2.0 | 5.5 |
| 10 | 123 | 0.8 | 2.8 | 2.3 |
| 11 | 70 | 0.97 | 2.9 | 3.5 |
| 12 | 123 | 0.84 | 3.6 | 4.0 |
| 13 | 120 | 0.97 | 2.1 | 3.5 |
| 14 | 126 | 0.02 | 10.3 | 3.0 |
| 15 | 122 | 0.92 | 3.6 | 2.3 |
| 16 | 126 | 1.20 | 1.5 | 2.5 |
| 17 | 91 | 0.69 | 2.6 | 2.2 |
| * In Examples 6 and 6A the solution was maintained at 50°C for 5 hours and 30 minutes, before urea addition; | | | | |
| ** In Example 15 the solution was maintained at 55°C for 8 hours after urea addition; | | | | |
| *** In Example 17, the acid titanyl sulfate solution of preparation B was first neutralized with calcium carbonate reaching a pH of 0.09, then the formed calcium sulfate was filtered out. The final neutralization of the solution was carried out with ammonium bicarbonate, reaching a pH of 0.69 as shown in table 4. | | | | |

Preparation of silicon-containing titanium dioxide: The exact conditions of treating the precipitate of titanium hydroxide (in the form of a suspension or a wet cake) with silica sol, for each example, are indicated in table 5.

**Table 5**

| Ex. No. | Concentration of titanium hydroxide in the suspension (as % TiO₂) | Concentration of silica sol (as g/l SiO₂) | Cationic Form of silica sol | Quantity of silica sol (in terms of % SiO₂ in TiO₂) | |
|---|---|---|---|---|---|
| | | | | introduced | consumed by Titanium hydroxide |
| 6 | 10 | 3.2 | NH₄⁺ | 7.0 | 6.9 |
| 6A | 10 | 3.3 | NH₄⁺ | 15.0 | 13.8 |
| 7 | 10 | 3.0 | NH₄⁺ | 2.0 | 2.0 |
| 8 | 10 | 3.4 | NH₄⁺ | 3.0 | 3.0 |
| 9 | 10 | 3.4 | NH₄⁺ | 7.0 | 6.0 |
| 10 | Wet cake | 3.2 | NH₄⁺ | 30.0 | 15.3 |
| 11 | 12 | 3.3 | NH₄⁺ | 10.0 | 10.7 |
| 12 | Wet cake | 20.6 | NH₄⁺ | 16.5 | 13.4 |
| 13 | 15 | 11.6 | NH₄⁺ | 5.0 | 5.0 |

The properties of the titanium dioxides, also in comparison to titanium dioxides known in the art, are given in the following tables.

**Table 6**

| Ex. No. | Specific surface Area of titanium dioxide obtained without the treatment with silica sol (precipitate dried at 110°C) | Specific surface area of titanium dioxide obtained after the treatment with basic silica sol, m²/g | | | | |
|---|---|---|---|---|---|---|
| | | Dried (110°C) | ! After calcination ! for 3 hours, at ! a temperature (°C) of | | | |
| | | | ! 500 | 700 | 800 | 900 |
| 6 | 424 | 470 | 285 | 170 | 116 | |
| 6A | 416 | 478 | 357 | 269 | 203 | |
| 7 | 393 | 393 | | | 53 | 28 |
| 8 | 390 | 448 | | 111 | 72 | 31 |
| 9 | 390 | 450 | | 170 | 119 | 56 |
| 10 | 360 | | 312 | | 228 | 146 |
| 11 | 403 | 429 | | | 142 | 81 |
| 12 | 406 | 430 | 367 | 269 | | |
| 13 | 400 | 435 | 238 | 141 | | |
| 14 | 434 | | | | | |
| is | 460 | 490 | | | | |
| 16 | 416 | | | | | |
| 17 | 402 | | | | | |
| UNITi 908 | | 328 | 93 | 24 | | |

**Table 7**

| Hydrothermal stability of the modified titanium dioxides in comparison with commercially available materials. | |
|---|---|
| Example No. | Specific surface area (m²/g), after steaming^{x} during 5 hours at 400°C |
| 6 | 173 |
| 6A | 320 |
| 21 | 132 |
| Commercial TiO₂: | |
| UNITi 908 | 94 |
| S-150 | 84 |

| | |
|---|---|
| Note: ^{x} the steaming stream contained 90% by volume water vapors, and 10% by volume air. | |

**Table 8**

| Sulfur content of modified titanium dioxides | | |
|---|---|---|
| Sulfur content, (% by weight) | | |
| Example No. | Calculated as sulfur | Calculated as (SO₄²⁻) |
| 1 | 0.04 | 0.12 |
| 5 | 0.24 | 0.72 |
| 10 | 0.10 | 0.30 |
| 22 | 0.07 | 0.21 |
| Commercial titanium dioxide | 0.3-1.0 | 0.9-3.0 |

**Table 9**

| Specific surface area distribution on pore diameters of modified titanium dioxides in comparison with known ones | | | | | | | | |
|---|---|---|---|---|---|---|---|---|
| Example | Total specific surface area | | Specific surface area formed by pores with a diameter greater than: | | | | | |
| | m²/g | In % of analogous value for a commercial sample S-140 | m²/g | 4.10nm In % of analogous value-for a commercial sample S-140 | m²/g | 3.5nm In % of analogous value for a commercial sample S-140 | m²/g | 3.3nm In % of analogous value-for a commercial sample S-140 |
| Example 6 | | | | | | | | |
| TiO2 before treating with basic silica sol. | 424 | 129 | 180 | 269 | 334 | 380 | 352 | 352 |
| TiO2 treated with basic silica sol as described in Example 6 | 470 | 143 | 251 | 375 | 352 | 400 | 371 | 371 |

| Example 6 A | | | | | | | | |
|---|---|---|---|---|---|---|---|---|
| TiO2 treated with basic silica sol as described in Example 6A | 476 | 145 | 319 | 476 | 367 | 417 | 378 | 393 |

| Example 15 | | | | | | | | |
|---|---|---|---|---|---|---|---|---|
| TiO2 before treating with basic silica sol | 490 | 149 | 182 | 272 | 242 | 275 | 259 | 270 |
| Commercial TiO2 UNITi-908 | 328 | 100 | 48 | 72 | 62 | 70 | 67 | 70 |
| Commercial TiO2 S-140 | 329 | 100 | 67 | 100 | 88 | 100 | 96 | 100 |
| Note: all the data listed in this Table were measured with Coulter Instrument SA 3100. | | | | | | | | |

**Table 10**

| The adsorption pore volume distribution on pore diameters of modified titanium dioxide samples compared with known ones. | | | | | | |
|---|---|---|---|---|---|---|
| Example | Adsorption pore volume formed by pores with diameter | | | | | |
| | cc/g | less than 100 nm In % of analogous value for commercial sample S-140 | cc/g | greater than 4.1 nm In % of analogous value for commercial S-140 | cc/g | greater than 3.5 nm In % of analogous value for commercial sample S-140 sample |
| Example 6 | | | | | | |
| TiO2 before the treatment with basic silica sol | 0.47 | 147 | 0.23 | 110 | 0.41 | 178 |
| TiO2 treated with basic silica sol as described in Example 6 | 0.52 | 163 | 0.31 | 148 | 0.41 | 178 |

| Example 6 A | | | | | | |
|---|---|---|---|---|---|---|
| TiO2 treated with basic silica sol as described in Example 6 A | 0.63 | 180 | 0.49 | 233 | 0.54 | 235 |

| Example 15 | | | | | | |
|---|---|---|---|---|---|---|
| TiO2 before the treatment with basic silica sol | 0.56 | 160 | 0.36 | 171 | 0.40 | 174 |
| Commercial TiO2 -UNITI- 908 | 0.32 | 91 | 0.20 | 105 | 0.22 | 96 |
| Commercial TiO2 S-140 | 0.35 | 100 | 0.21 | 100 | 0.23 | 100 |
| Note: all the data listed in this Table were measured with Coulter instrument SA 3100. | | | | | | |

**Table 11**

| Comparison of thermal stability of the modified titanium dioxide prepared according to the present invention and a mixed titania-silica oxide as described in US 4,221,768 | | | | | |
|---|---|---|---|---|---|
| Samples prepared according to the present invention and calcined at 500°C for 3 hours | | | Samples as described in US Patent 4,221,768 (calcined at 500°C for 3 hours) | | |
| Example No. | TiO₂ content of the sample (% by weight) | Specific surface area (m²/ g) | Example No. | TiO₂ content of the sample (% by weight) | Specific surface area (m²/g) |
| 12 | 86 | 367 | 1 | 84 | 220 |
| | | | 4 | 84 | 280 |
| 5 | 90 | 327 | 6 | 91 | 230 |

**Table 12**

| Specific surface areas of calcined titanium dioxide according to the present invention compared with those described in European Patent Applications Nos. 0 576 120 and 0 311 515. | | | | | |
|---|---|---|---|---|---|
| **Specific surface area of calcined samples (m**^{**2**}**/g)** | | | | | |
| **temperature of calcination** | **duration of calcination** | **The present invention** | | **EP 576120** | **EP 311515** |
| | | Example 6 | Example 10 | Example 1 | Example Q |
| 575 | 1 | 229 | 360 | | 93 |
| 575 | 7 | 210 | 350 | | 85 |
| 800 | 3 | 116 | 228 | 65.6 | |

**TABLE 13:**

| Comparison between structural indicators of calcined samples prepared according to the present invention and those described in the literature. | | | | | | | | | |
|---|---|---|---|---|---|---|---|---|---|
| **Prepared according to the present invention** | | | | **Described in literature** | | | | | |
| Example | Quantity silicon of since introduced in the titania's structure calculated as SiO2,% | Calcining conditions | | Specific surface area | Quantity of silica in titania / silica mixed oxides | Calcining conditions | | Specific surface area | References |
| | | Temperature | Duration | | | Temperature | Duration | | |
| | | oC | hours | (m²/g) | (%) | oC | hours | (m²/g) | |
| 5 | 9.9 | 700 | 3 | 277 | 20.0 | 600 | | 85 | Applied |
| 6 | 6.9 | 700 | 3 | 170 | | | | | Catalysis |
| 8 | 3.0 | 700 | 3 | 111 | | | | | A: General |
| 5 | 9.9 | 800 | 3 | 164 | | | | | 139(1996) |
| 10 | 15.3 | 900 | 3 | 146 | | | | | 175-187 |
| 6 | 6.9 | 500 | 3 | 285 | 25.0 | 500 | 2 | 213 | Journal |
| 6A | 13.8 | 500 | 3 | 357 | | | | | of |
| 12 | 14.0 | 500 | 3 | 367 | | | | | catalysis |
| 21 | 7.0 | 500 | 3 | 234 | | | | | 105 ,511-520 |
| 22 | 15.0 | 500 | 3 | 227 | | | | | (1987) |

It is apparent from the above tables that the novel silicon-containing titanium dioxides are significantly superior, concerning the thermal and hydrothermal stability, over known titania and known titania-silica mixed oxides.

### Example 18

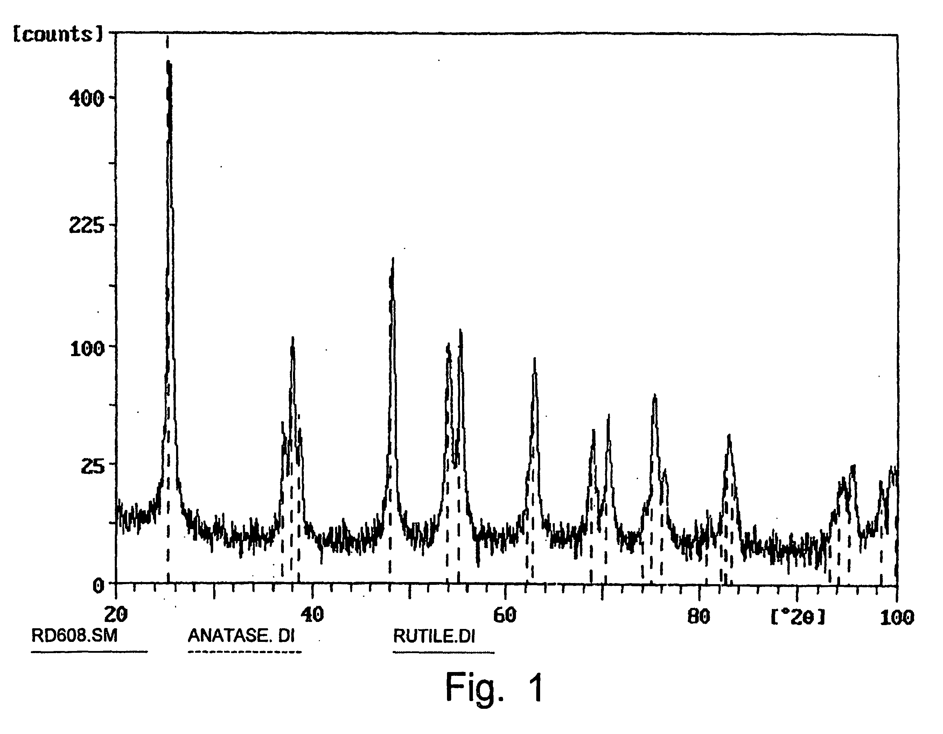

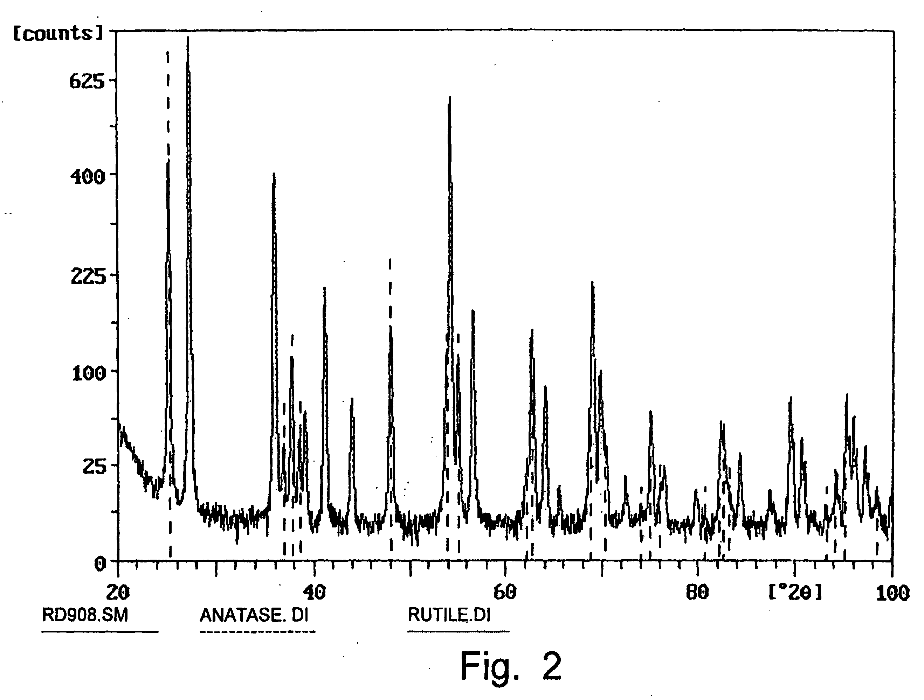

Samples of titanium dioxide of Example 6 and of commercially available titanium dioxide (UNITi 908) were calcined at 950oC for one hour. Figures 1 and 2 depict the diffraction pattern of said calcined samples, respectively. It is apparent from Figure 1 that the thermally stable titanium dioxide of Example 6 maintained the favorable crystalline structure of the Anatase form after the calcination, while the crystalline structure of commercial material (UNITi 908) was partially converted into the catalyticaly unfavorable Rutile form (Figure 2).

### Example 19

The sample prepared in Example 12 was investigated by the EDAX method, to determine the local composition of the titanium dioxide at two different points and the composition of the bulk. The results are detailed in the following table 14:

**Table 14**

| | TiO₂ | SiO₂ | CaO |
|---|---|---|---|
| Point 1 | 87.5 | 12.3 | 0.2 |
| Point 2 | 87.7 | 12.3 | absent |
| Bulk | 87.8 | 12.1 | 0.1 |

It is apparent from the above table, that, despite very slight variations from one point to another, titanium and silicon are present in each point of the novel titanium dioxide. No separate phases of TiO₂ or SiO₂ exist. The calcium observed is merely a casual impurity in the sample.

### EXAMPLES 20-22.

### Preparation of silicon-containing titanium dioxides

- Starting material:: commercially available titanium dioxide
- Silica sol:: basic silica sol stabilized with ammonium cations.

In these Examples, the process according to the present invention was carried out using commercially available titanium dioxides as the starting material. In Examples 20 and 21, titanium hydrolysates (S-140 and S-150) as produced by KEMIRA PIGMENT OY (Finland) were used. In Example 22, a hydrolysate (UNITi 908) produced by KEMIRA PIGMENT (U.S.A.) was used. The preparation data is summarized in the following table 15:

**Table 15**

| Commercial titanium dioxides modified with silica sol. | | | | | | |
|---|---|---|---|---|---|---|
| **Example No.** | **The sample of the TiO**_{**2**} **used** | **Quantity of used TiO**_{**2**} **grams)** | **Concentration of silica sol as % SiO**_{**2**} **in sol** | **Suspension or wet cake were treated** | **Quantity of silica sol, as % SiO**_{**2**} **calculated an TiO**_{**2**} | |
| | | | | | Introduced in the suspension or in the cake | taken up by TiO₂ |
| 20 | S-140 | 200 | 3.1 | suspension | 7 | |
| 20 | S-140 | 200 | 3.1 | suspension | 10 | |
| 20 | S-140 | 200 | 3.1 | suspension | 14 | |
| 21 | S-150 | 200 | 3.3 | suspension | 7 | |
| 21 | S-150 | 200 | 3.3 | suspension | 10 | |
| 22 | UNITi 908 | 10 | 20.6 | wet cake | 15 | 13 |

The properties of the, titanium dioxides of the present invention, prepared by using commercially available titanium hydroxides/dioxides as the starting material, are given in table 16:

**Table 16**

| Specific surface areas of commercial titanium dioxides modified with ammonium silica sols. | | | | | | |
|---|---|---|---|---|---|---|
| Ex. No. | Quantity of silica Sol as % SiO₂ in TiO₂ | Specific surface area of titanium dioxide obtained after the treatment with basic silica sol, m²/g | | | | |
| | | Dried (110°C) | ! After calcination ! for 3 hours, at ! A temperature of | | | |
| | | | ! 500 | 700 | 800 | 900 |
| 20 | none | 329* | | 16 | | |
| 20 | 7 | | | 101 | 58 | |
| 20 | 10 | | | 119 | | |
| 20 | 14 | | 191 | 143 | 94 | |
| 21 | 7 | 290 | 234 | 102 | 90 | |
| 21 | 10 | | | 126 | | |
| 22 | 15 | | 227 | 210 | 116 | 80 |
| 22 | none | 328 | 93 | 24 | | |

| | | | | | | |
|---|---|---|---|---|---|---|
| *measured by a Coulter Instrument | | | | | | |

The beneficial effects of the method according to the present invention, are evident from the Tables 6, 7, 8.

### Example 23

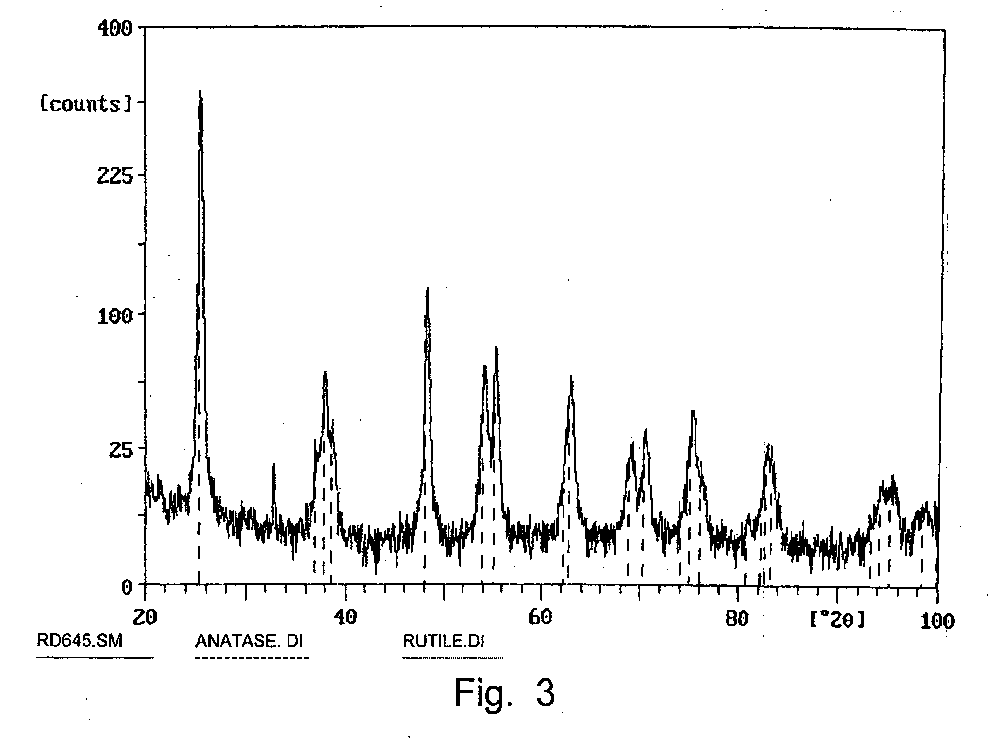

A samples of titanium dioxide of Examples 22 was calcined at 950oC for one hour. Figures 3 depict the X-ray diffraction pattern of said calcined samples. It is apparent from from comparison of Figures 2 and 3 that the thermally stable titanium dioxide of Example 22 maintained the favorable crystalline structure of the Anatase form after the calcination, while the crystalline structure of commercial titanium dioxide was partially converted into Rutile form.

### Example 24 (comparative)

In this example, an acidic silica sol was introduced directly into a titanyl sulfate solution of preparation B in an amount corresponding to 10% as SiO2 (calculated on the basis of the TiO₂ content of the solution, present as titanyl sulfate). The titanyl sulfate solution was first diluted to a concentration of 70 g/l of TiO₂ The pH was adjusted to 0.93 using ammonia, The resulting solution was heated for 2.6 hours (urea: TiO₂ ratio being 3.0), and the precipitation of titanium hydroxide took place in the presence of silica sol.

The precipitate was dried at 110C, and had a specific surface area of 365 m²/g. After calcination of 3 hours at 500°C and 700°C, the surface area decreased to 234 and 115 m²/g, respectively.

### Example 25

In this example, acidic and basic silica sols were used and their modifying effects were compared. The criterion of effectiveness was the decrease in the specific surface area of the titanium dioxides as prepared in Examples 13 and 16. In all these experiments corresponding titanium hydroxides were introduced into silica sols having a concentration of 3% calculated as SiO₂. In one experiment it was an acid sol and in another one, it was a basic sol stabilized with an ammonium cation. As can be noticed from Table 17, both the acid and the basic sols produce the stabilizing effect, but the basic sol provides a higher stabilizing effect.

**Table 17**

| Comparison of modificatory effects of acid and basic silica sols. | | | | | |
|---|---|---|---|---|---|
| Example No. | Specific surface area of original TiO₂, (m²/g) | Type of silica sol | Quantity of silica sol, as % SiO₂ in TiO₂ | Specific surface area (m²/g), after calcination for 3 hr at a temperature of | |
| | | | | 500°C | 700°C |
| 13 | 400 | acidic | 8 | | 107 |
| 14 | 400 | basic | 5 | 242 | 145 |
| 15 | 416 | acidic | 4 | 155 | 62 |
| 16 | 416 | basic | 4 | 230 | 123 |
| 17 | 416 | without | | 111 | 8 |

### Example 26

In this Example the effectiveness of the modified titanium dioxide as an active component of Claus catalyst, is demonstrated.

The modified titanium dioxide as obtained in Example 1, was mixed with powdery silica N60 (produced by PPG) and an acid silica sol. The powdery silica was used as an inert filler and the silica sol was used as a binder component. The composition of this mixture, in weight percentage was as follows:

| | |
|---|---|
| Modified titanium dioxide | 24.9% |
| Powdery silica | 64.6%, and |
| Silica sol (calculated as SiO2) | 10.5% |

The mixture was granulated into extrudates with a diameter of 3.6 mm, dried at 110°C for two hours and then calcined at 400°C for three hours. The results with this catalyst tested in a bench scale pilot plant, using the known conditions as used in the Claus process were as follows:

| | |
|---|---|
| H₂S + SO₂ | 100 * |
| COS + H₂O | 100 |
| CS₂ + H₂O | 98. |

| | |
|---|---|
| (*expressed the activity as shown by the conversion related to the equilibrium). | |

### Example 27

This Example shows that the modified titanium dioxide can be used also as a carrier for catalysts which is effective in the oxidation of organic compounds in a gas phase.

Two samples were prepared and tested in a laboratory unit for the catalytic oxidation of propane (3 mol.%) in air at 400oC, In the two cases titanium dioxide was doped with vanadium oxide.

The compositions of the catalysts and the results of the respective tests are given in Table 18. As can be noticed the titanium dioxide as prepared by the present invention, is useful as a catalyst carrier for organic impurities in air oxidation.

**Table 18**

| Catalytic oxidation of propane in air at 400°C. | | | | |
|---|---|---|---|---|
| Number of samples from which titanium dioxide was taken | Quantity of vanadia introduced into TiO₂ (% by weight) | Quantity of doped TiO₂ in catalyst (% by weight) | Quantity of siliceous filler and binder in catalyst (% by weight) | Extent of oxidation (%) |
| 5 | 3 | | | 100 |
| 12 | 5 | 38 | 62 | 100 |

### Example 28

An experiment was carried out to show that the titanium dioxide prepared according to the present invention can be successfully used as a photocatalyst for the degradation of organic impurities in water by oxidation. The titanium hydroxide precipitated from the acid sulfate solution in the presence of urea and after washing was separated in the form of a wet cake containing 25% by weight TiO₂ before the treatment with basic silica sol (as in Example 7).
The procedure of the testing consists in the use of a suspension of 0.15 - 0.30 grams, calculated as TiO₂ placed in a bottle of 2 l. A quartz tube (internal diameter 1 cm and length 1 m) was used as a sun radiation reactor. Through this reactor and a bottle of water a stream containing 35 to 44 ppm of atrazine was pumped.

A comparative test with a commercial titanium dioxide (P-25, as produced by Degussa) was used for photodegradation of organic impurities in water. As can be noticed from Table 19, the titanium dioxide prepared according to the present invention can be useful also as a photocatalyst for this reaction.

**Table 19**

| Photodegradation of atrazine in aqueous solutions | | | | |
|---|---|---|---|---|
| | Duration of degradation, hours | | | |
| Sample | 0 | 1 | 2 | 3 |
| | Concentration of atrazine in ppm | | | |
| Titanium hydroxide from Example 7 | 35 | 28 | 23 | 17 |
| P-25 (Degussa) | 44 | 20 | | 17 |

### Example 29

This example demonstrates the preparation of a catalyst, possessing a high catalytic activity in the Claus process, with the modified titanium dioxide as an active component, powdery precipitated silica as a filler and silica sol as a binder material,
In this example the following starting materials were used:
- Modified titanium dioxide prepared according to Example 1.
- Powdery silica precipitated from a solution of sodium silicate with sulfuric acid.
   . An acidic sol of silicic acid.

The modified titanium dioxide and powdery silica were dried at 105°C for 24 hours. After drying, the two materials had losses on ignition values (LOI) as shown in Table 20.

Acidic sol of silicic acid was prepared from sodium sol of silicic acid using a cation exchange resin C-100 produced by PUROLITE™.

An amount of 0.5 liter of sodium silica sol with a concentration of about 10% by weight, calculated on anhydrous silica dioxide, had been treated with the H-form of the above mentioned cation exchange resin thus obtaining an acid sol of silicic acid having a pH of about 3.0, and a SiO2 content of 9.8% by weight.

The above materials were mixed in a laboratory mortar in the form of a paste, its composition calculated on dry basis, is given in Table 21.

The paste was passed through a laboratory extruder obtaining extrudates with a diameter of 3.0 mm. The extrudates were dried at 120°C for 3 hours in a laboratory dryer and then calcined at 400°C for 3 hours in a laboratory muffle. The structural properties of the catalyst obtained are given in Table 22. As can be noticed, the quantity of titanium dioxide present in 1 m3 of catalyst bed, is only 140 Kg which is less than the quantity 777-900 kg present in a commercial catalyst (see Table 5). In order to test the catalytic activity of the above prepared extrudates, these were crushed and the fraction between 8 and 12 mesh was separated by sieving and then tested in a bench scale pilot plant using the conditions as for the Claus process. The results of the tests are given in Table 23.

### Example 30.

This example demonstrates that the modified titanium dioxide can be calcined before its incorporation in the mixture with the other components of the catalyst.

The same modified titanium dioxide as in Example 29 was preliminary calcined at 350°C for 5 hours.

The paste mixture was prepared from this titanium dioxide, siliceous filler and a binder in a laboratory mortar (see Table 20); the composition of this paste, calculated on dry basis, is given in Table 20.

The paste had been formed into the same extrudates as in Example 29 in a laboratory extruder and then the extrudates were dried and calcined as in Example 29.

The structural properties of the prepared catalyst are given in Table 22.

The extrudates were crushed and the fraction with sizes of crumbs between 8 and 12 mesh, was tested in a bench scale pilot plant using the conditions as for Claus process. The results are given in Table 23.

### Example 31 (comparative)

An experiment was carried out using a commercial titanium dioxide catalyst.
This catalyst was introduced in the same reactor as in Examples 29 and 30. The amount of the titanium dioxide used in this case, was substantially the same as in Example 29. It is apparent from Table 23 that the difference in carbon disulfide conversion is equal to 10% which shows that the titanium dioxide present in the novel catalyst is more active than the same amount of titanium dioxide present in a commercial catalyst.

### Examples 32- 34

In the preparation of the catalysts samples in a pilot plant, diatomaceous earth "CELITE FC" received from LOMPOS (USA) was used as an inert filler. The chemical composition of this material was as follows:

| % by weight | |
|---|---|
| SiO₂ | 85.8 |
| Al₂O₃ | 3.8 |
| Fe₂O₃ | 1.2 |
| CaO+MgO | 1.1 |
| Na₂O+K₂O | 1.1 |
| P₂O₅ | 0.2 |
| Loss on ignition | 3.6 |

The physical properties of this material were as follows:

| | |
|---|---|
| Loose weight (g/liter) | 120 |
| Oil absorption (% by weight) | 128 |
| Water absorption (% by weight) | 280 |

As natural diatomaceous earth contains some undesirable impurities, such as sodium, potassium, iron, aluminum, it was preliminary purified by an acid treatment. For this purpose hydrochloric or sulfuric acid having a concentration of 15%-20% was used, the temperature during this treatment being between 90o-98o C for about 3 hours. The purified diatomaceous earth was filtered, washed with demineralized water and used for the preparation of shapable dough in the form of wet cake or as a dried material. In some cases diatomaceous earth can be used as a filler without a preliminary purification.
In Examples 32, 33 and 34, the purified diatomaceous earth was used .

The titanium dioxide from Example 1 was used as an active component in Examples 32-34 together with a silica hydrogel, prepared by the following procedure, as a binder material: Basic silica sol prepared in its sodium form, having an initial concentration of about 3% (calculated as SiO2) was evaporated to an extent that its concentration increased to 20-30% by weight. Then this sol was treated with a cation exchanger in order to eliminate the sodium and accordingly to decrease its pH to about 3.0. The resulted acidic sol was treated with an aqueous solution of ammonia until its pH increased up to 6-7 and then it was heated. During the heating coagulation of the sol into hydrogel took place and this hydrogel was used for the mixing with the other components.

The modified titanium dioxide in the form of a wet cake,a purified and dry diatomaceous earth and silica hydrogels were mixed in a double shaft mixer-sigma blade (produced by Sepor). After obtaining a homogeneous mixture, it was slightly dried in order to obtain a proper consistency suitable for extrusion. The extrudates having a diameter of 3.6 mm, were obtained with a piston extruder, dried at 120oC for about two hours and calcined at 450°C for 3 hours.

The losses on ignition are shown in Table 20, the compositions of the catalysts as prepared in a pilot plant are given in Table 21 and the properties of the catalysts obtained are given in Table 24.

### Examples 35-39

This group of Examples describes the preparation of the novel catalyst in the form of extrudates possessing a high hardness without any binder. In each case the catalyst consists of two components: the modified titanium dioxide and an inert filler, namely purified diatomaceous earth (as obtained in Examples 32-33). Losses on ignition for the components are shown in Table 20 and the compositions of the catalysts are given in Table 21.

In each case the active component was mixed with the inert filler and the resulted mixture was malaxated thus producing a shapable dough using a double shaft mixer, as described in Examples 32 to 34 and a piston extruder as used in a process of granulation. After drying at 120°C the extrudates were calcined in a muffle at a temperature of 450°C for 3 hours.

The following variations exist between the Examples 35 to 39:

In Example 35, diatomaceous earth was introduced as a wet cake after filtration, containing 35% of dry material. The paste was partially dried to 55.2% dry material, and then extruded using a piston extruder.

In other cases, diatomaceous earth was used in the form of a dried material (120°C) having a loss on ignition between 5%to 6% (see Table 20) .

### Examples 40 and 41

These Examples demonstrate the possibility of obtaining a hard and thermal stable extrudated catalyst, using stabilized commercial titanium dioxides as described above or its mixture with a precipitated titanium dioxide (Example 41). The properties of catalysts prepared according to Examples 40 and 41 are shown in Tables 20, 21, 24 and 28.

**TABLE 20**

| Components used for catalysts preparation: | | | | | | |
|---|---|---|---|---|---|---|
| Example No. | Modified titanium dioxide (active component) of example | Filler | | Binder | | |
| | | Loss on | Name | Loss on | Name | Loss on |
| | | ignition, weight % | | ignition, weight % | | ignition, weight % |
| 29 | 1 | 9.1 | Powdery silica | 7.8 | Acidic silica sol | 90.2 |
| 30 | 2 | 3.0 | " | 7.8 | Acidic silica sol | 90.2 |
| 32 | 1 | 59.2 | Diatomaceous earth | 5.0 | Silica hydrogel | 70.3 |
| 33 | 1 | 57.5 | " | 4.0 | Silica hydrogel | 74.5 |
| 34 | 1 | 52.3 | " | 4.0 | Silica hydrogel | 79.5 |
| 35 | 10 | 63.7 | " | 6.5 | absent | |
| 36 | 12 | 62.5 | " | 8.0 | absent | |
| 37 | 9 | 70.0 | " | 5.0 | absent | |
| 38 | 6 | 73.0 | " | 4.0 | absent | |
| 39 | 6A | 72.0 | " | 5.0 | absent | |
| 40 | 21 in amount of 37% and | 63.0 | " | 5.0 | absent | |
| | 22 in amount of 37%(by weight) | 59.0 | | | | |
| 41 | 21 in amount of 55% and 6 in amount of 15% | 61.0 | " | 5.0 | absent | |

**Table 21**

| Compositions of catalysts prepared in laboratory and in a pilot plant on the basis of precipitated modified titanium dioxides (% by weight calculated on dry basis) | | | | | | | | | | | | | |
|---|---|---|---|---|---|---|---|---|---|---|---|---|---|
| EXAMPLES | | | | | | | | | | | | | |
| | | LABORATORY | | | | | PILOT PLANT | | | | | | |
| | | 29 | 30 | 32 | 33 | 34 | 35 | 36 | 37 | 38 | 39 | 40 | 41 |
| Composition | | | | | | | | | | | | | |
| 1. | TiO₂ | 28.4 | 28.0 | 30.0 | 35.0 | 35.0 | 35.0 | 25.0 | 40.0 | 38.0 | 45.0 | 74.0 | 70.0 |
| 2. | Siliceous component (calculated as SiO₂) | 60.2 | 61.4 | 55.0 | 55.0 | 55.0 | 65.0 | 75.0 | | 62.0 | 55.0 | 26.0 | 30.0 |
| 3. | Binder materials: | | | | | | none | none | none | none | none | none | none |
| | | | | | | | | | | | | | |
| 3.1 | Acidic silica sol | 11.4 | 10.6 | none | none | none | | | | | | | |
| | | | | | | | | | | | | | |
| 3.2 | Silica hydrogel | none | none | 15.0 | 10.0 | 10.0 | | | | | | | |

**Table 22.**

| Structural properties of catalysts prepared in laboratory | | | | | |
|---|---|---|---|---|---|
| Example No. | Tamped bulk density, | Specific surface area, | Composition of 1m3 of a tamped catalyst bed, | | |
| | kg/m3 | m2/g | kg/m3 | | |
| | | | Silica as a filler | Silica as a binder (from sol) | Titanium dioxide |
| 29 | 490 | 134 | 294 | 55 | 140 |
| 30 | 480 | 137 | 294 | 50 | 134 |

**Table 23.**

| Catalytic activity of novel catalysts, prepared in laboratory, in Claus process. | | | | | | |
|---|---|---|---|---|---|---|
| Extent of conversion in reactions | | | | | | |
| | H₂S + SO₂ | | COS + H₂O | | CS₂ + H₂O | |
| Example No. | Initial Catalyst | Aged Catalyst² | Initial Catalyst | Aged Catalyst | Initial Catalyst | Aged Catalyst |
| 29 | 93¹ | 97¹ | 100 | 100 | 96 | 90 |
| 30 | 97¹ | 97¹ | 100 | 100 | 97 | 91 |
| 31 comparative) | 94¹ | - | - - | | 86 | - |

| | | | | | | |
|---|---|---|---|---|---|---|
| 1 calculated as percentage of conversion at equilibrium state. | | | | | | |
| 2 in all cases aging was carried out in a laboratory with a common hydrothermal treating and sulfating. | | | | | | |

**TABLE 24.**

| Properties of catalysts prepared in a pilot plant. | | | | | | |
|---|---|---|---|---|---|---|
| Example No. | Hardness (Crushing strength), kg/extrudate | Specific surface area, m²/g | Tamped bulk density, kg/m³ | Composition of a 1 m³ of tamped catalyst bed, kg/m³ | | |
| | | | | TiO₂ | Filler | Binder |
| 32 | 20 | 165 | 635 | 191 | 349 | 95 |
| 33 | 17 | 175 | 634 | 222 | 222 | 63 |
| 34 | 12 | 179 | 567 | 198 | 312 | 57 |
| 35 | 20 | 174x | 590 | 207 | 383 | absent |
| 36 | 12 | 166x | 597 | 209 | 388 | absent |
| 37 | 9 | 144 | 545 | 191 | 354 | absent |
| 38 | 13 | - | 617 | 234 | 383 | absent |
| 39 | 14 | 220x | 640 | 288 | 352 | absent |
| 40 | 9 | 164 | 800 | 592¹ | 208 | absent |
| 41 | 11 | 187 | 700 | 490² | 210 | absent |
| Commercial Claus catalyst based on titanium dioxides: | | | | | | |
| "A" | 7 | 134x | 860 | 777 | - | - |
| "B" | 7 | 124x | 1000 | 900 | - | - |

| | | | | | | |
|---|---|---|---|---|---|---|
| **Notes to table 24:** 1. Mixture of stabilized commercial titanium dioxides (see Table 20). | | | | | | |
| 2. Mixture of stabilized commercial titanium dioxide and precipitated titanium dioxide (see Table 20). 3. The sign x indicates that the values of specific surface area were determined with a Coulter instrument SA 3100. Figures without this sign were measured with an Analyser 4200 (Leeds and Northrup Instruments), In all the Tables the meaning of this sign is as above. | | | | | | |

**TABLE 25**

| Adsorption pore volume distribution on pore diameters for the novel catalyst in comparison with the commercial one | | | | | | |
|---|---|---|---|---|---|---|
| Adsorption pore volume formed by pores with diameter. | | | | | | |
| Example No. | less than 100 nm | | greater than 4.1 nm | | greater than 3.5 nm | |
| | cc/g | In % of the analogous values for the commercial catalyst "A" | cc/g | In % of the analogous values for the commercial catalyst "A" | cc/g | In % of the analogous values for the commercial catalyst "A" |
| 38 | 0.33 | 127 | 0.31 | 129 | 0.32 | 123 |
| 39 | 0.36 | 138 | 0.33 | 138 | 0.35 | 135 |
| Commercial Claus catalyst | | | | | | |
| "A" | 0.26 | 100 | 0.24 | 100 | 0.26 | 100 |
| Note: all the data listed in this table were measured with the Coulter Instrument SA 3100. | | | | | | |

**Table 26.**

| Macropore structure of catalysts prepared in a pilot plant in comparison with known ones. | | | | |
|---|---|---|---|---|
| Example No. | Pore volume formed by macropores with diameter greater than indicated (cc/g) | | | |
| | 100 nm | 200 nm | 300 nm | 400 nm |
| Mixture of catalysts from Examples 32, 33 and 34 | 0.38 | 0.30 | 0.20 | 0.05 |
| | | | | |
| Mixture of catalysts from Examples 35, 36 and 37 | 0.30 | 0.25 | 0.20 | 0.10 |
| | | | | |
| Example 38 | 0.21 | 0.14 | 0.05 | 0.02 |
| | | | | |
| Commercial Claus catalysts: | | | | |
| A: | 0.16 | 0.01 | - | - |
| B: | 0.01 | less than 0.01 | - | - |
| C: | 0.01 | less than 0.01 1 | - | - |

**TABLE 27:**

| Thermal stability of catalysts prepared in a pilot plant in comparison with known Claus catalysts. | | | | | |
|---|---|---|---|---|---|
| Example No. | Specific surface area of starting catalyst m²/g | Specific surface area of the catalyst calcined for 3 hours at indicated temperatures, m²/g | | | |
| | | 500°C | 700°C | 800°C | 900°C |
| 35 | 174x | | | 89 | 58 |
| 38 | 175 | | 121 | 109 | |
| 39 | 220x | 214 | 146 | 122 | |
| 40 | 180x | 164 | 118 | 79 | |
| Commercial Claus catalysts based on TiO₂ : | | | | | |
| A | 134x | | 28 | 4 | |
| B | 110 | 103 | 43 | 22 | 8 |
| C | 200 | 112 | 46 | 28 | 17 |

**TABLE 28**

| Hydrothermal stability of the novel catalyst in comparison with known ones. | | |
|---|---|---|
| Conditions of the hydrothermal treatment | | |
| -temperature: 500°C, | | |
| -treating agent water vapor, | | |
| -duration: 5 hours: | | |

| Specific surface area (m²/g) of steamed catalyst, calculated: | | |
|---|---|---|
| Example No. | per 1 gram | per 1 cc of tamped layer of a catalyst bed |
| 38 | 120 | 74 |
| 39 | 135 | 86 |
| 40 | 113 | 90 |
| Commercial catalyst "A" based on TiO₂ | 66 | 57 |
| Commercial catalyst "B" based on TiO₂ | 59 | 59 |

**TABLE 29.**

| Catalytic activity of catalysts prepared in a pilot plant | | | | | |
|---|---|---|---|---|---|
| Number of test | Catalytic process | Type of installation used for testing | Catalysts from Examples | Extent of conversion in the reactions | |
| | | | | H₂S+SO₂ | COS/CS₂+H₂O |
| 1 | Claus process | Bench-scale pilot plant | 35 | 89 | 92 |
| 2 | Sulfreen process | Big pilot | Mixture of Examples 32,33,34 | | |
| | temperature 220°C | | | 44 | 84 |
| | temperature 250°C | | | 38 | 90 |
| 3 | Sulfreen process | Big pilot | Mixture of Examples 35,36,37 | | |
| | temperature 220°C | | | 44 | 84 |
| | temperature 250°C | | | 39 | 92 |
| 4 | Sulfreen process | Big pilot | Commercial catalyst "C" | | |
| | temperature 220°C | | | 43 | 81 |
| | temperature 250°C | | | 37 | 84 |
| Note: in test 1 the extent of conversion in the reaction H₂S+SO₂ is calculated as a percentage of conversion at equilibrium state, in the other tests real values of conversion for the reactions H₂S+SO₂ and COS/CS₂+H₂O, both are listed. | | | | | |

## Claims

1. A method for preparing thermally stable, silicon-containing titanium dioxide, which method comprises the steps of providing a starting material that is titanium hydroxide or titanium dioxide, reacting said starting material with a silica sol, under alkaline conditions which prevent the coagulation of silica particles in said sol, to obtain silicon-containing titanium hydroxide or silicon-containing titanium dioxide, and, in the case of silicon-containing titanium hydroxide, heat treating the same to obtain silicon-containing titanium dioxide.

2. A method according to claim 1, wherein the starting material is titanium hydroxide obtained by a precipitation method which comprises the following steps:
a) providing an acidic aqueous solution containing inorganic salts of titanium and, if required, increasing the pH of the solution to a value above 0.02 but below the value at which precipitation of titanium hydroxide occurs, by introducing into said solution a first alkaline agent;
b) dissolving in said solution a precursor of an alkaline agent, and causing said precursor to generate said second alkaline agent and thereby to precipitate titanium hydroxide in the solution; and
c) separating and washing said precipitate of titanium hydroxide.

3. A method according to claim 2, wherein the first alkaline agent used in step a) is selected from ammonia, hydroxides and/or carbonates of alkali metals or alkali earth metals.

4. A method according to claim 2, wherein the precursor of the alkaline agent used in step b) is urea, which, upon heating, is decomposed to generate a second alkaline agent which is ammonia.

5. A method according to claim 1, wherein the conditions which prevent the coagulation of silica particles in the silica sol are chosen from among stabilizing said silica sol with an alkaline agent or treating the titanium hydroxide or titanium dioxide starting material with an alkaline agent before it is contacted with the silica sol, to adjust the pH of said starting material to a value above 6.0, and preferably between 8 to 10.

6. A method according to claim 1, wherein the titanium hydroxide or titanium dioxide starting material is in a form chosen from among wet cake, aqueous suspension, dough or dry form.

7. A method according to claim 1, wherein the reaction is carried out at a temperature in the range between ambient to boiling point of the liquid phase, preferably in the range of 70-100°C.

8. A titanium dioxide containing not more than 18% silicon, calculated in terms of SiO₂ on dry basis, which is a single phase, having essentially the same composition at different points, as determined by the EDAX method, which has a specific surface area greater than 300 m²/g, and a specific pore volume which is of at least 0.30 cc/g for pores having a diameter less than 100 nm, and which is thermally stable to the extent that it maintains the crystalline structure of the Anatase form after calcinations.

9. A catalyst comprising a thermally stable titanium dioxide as defined in claim 8 and a silica filler.

10. A catalyst according to claim 9, wherein the silica filler is diatomaceous earth.

11. A catalyst according to claim 9 or claim 10, wherein the catalyst further comprises a binder.

12. A catalyst according to claim 11, wherein the binder is a colloidal solution of silica or hydrogels of silicic acid.

13. A catalyst according to claim 9 prepared in the form of extrudates.

14. A method for preparing a titanium dioxide catalyst, which method comprises providing an initial material chosen from among titanium dioxide or titanium hydroxide prepared according to a method of claim 1 and containing not more than 18% silicon, calculated in terms of SiO₂ on a dry basis, mixing said initial material with a silica filler, mixing, and either optionally adding water or drying to a certain extent, to form a homogeneous dough, shaping said dough into forms of a desired shape, drying said forms and calcining said forms.

15. A method according to claim 14, wherein the silica filler is chosen from among diatomaceous earth, precipitated silica and silica hydrogels.

16. A method according to claim 14, wherein the starting material is titanium dioxide having high surface area and a well developed mesopore structure, prepared by:
a) providing an acidic aqueous solution containing inorganic salts of titanium and, if required, increasing the pH of the solution to a value above 0.02 but below the value at which precipitation of titanium hydroxide occurs, by introducing into said solution a first alkaline agent;
b) dissolving in said solution a precursor of an alkaline agent, and causing said precursor to generate said second alkaline agent and thereby to precipitate titanium hydroxide in the solution; and
c) separating and washing said precipitate of titanium hydroxide and converting the same to titanium dioxide.

17. A method according to claim 14, further comprising adding, to the titanium starting material and the silica filler, a binder.

18. A method according to claim 17, wherein the binder is chosen from among a colloidal solution of silica and hydrogels of silica acid.

## Patentansprüche

1. Verfahren zur Herstellung von wärmestabilem, siliciumhaltigem Titandioxid, wobei das Verfahren die Schritte des Bereitstellens eines Ausgangsmaterials, bei welchem es sich um Titanhydroxid oder Titandioxid handelt, des Umsetzens des Ausgangsmaterials mit einem Siliciumdioxidsol unter alkalischen Bedingungen, die die Koagulation der Siliciumdioxidteilchen in dem Sol verhindern, unter Erhalt von siliciumhaltigem Titanhydroxid oder siliciumhaltigem Titandioxid und im Falle von siliciumhaltigem Titanhydroxid des Wärmebehandelns desselben unter Erhalt von siliciumhaltigem Titandioxid umfasst.

2. Verfahren nach Anspruch 1, wobei es sich bei dem Ausgangsmaterial um Titanhydroxid handelt, das durch ein Ausfällungsverfahren erhalten wird, das die folgenden Schritte umfasst:
a) Bereitstellen einer sauren, wässrigen Lösung, die anorganische Titansalze enthält, und, falls erforderlich, Erhöhen des pH-Werts der Lösung auf einen Wert über 0,02, jedoch unter den Wert, bei welchem eine Ausfällung von Titanhydroxid stattfindet, durch Einbringen eines ersten alkalischen Mittels in die Lösung,
b) Auflösen einer Vorstufe eines alkalischen Mittels in der Lösung und Bewirken dessen, dass die Vorstufe ein zweites alkalisches Mittel bildet und dadurch Titanhydroxid in der Lösung ausfällt und
c) Auftrennen und Waschen des Niederschlags aus Titanhydroxid.

3. Verfahren nach Anspruch 2, wobei das in Schritt a) verwendete erste alkalische Mittel ausgewählt ist aus Ammoniak, Hydroxiden und/oder Carbonaten von Alkalimetallen oder Erdalkalimetallen.

4. Verfahren nach Anspruch 2, wobei es sich bei der Vorstufe des in Schritt b) verwendeten alkalischen Mittels um Harnstoff handelt, der durch Erwärmen zersetzt wird, um ein zweites alkalisches Mittel zu bilden, bei welchem es sich um Ammoniak handelt.

5. Verfahren nach Anspruch 1, wobei die Bedingungen, die die Koagulation von Siliciumdioxidteilchen in dem Siliciumdioxidsol verhindern, ausgewählt sind aus Stabilisieren des Siliciumdioxidsols mit einem alkalischen Mittel oder Behandeln des Titanhydroxid- oder Titandioxid-Ausgangsmaterials mit einem alkalischen Mittel, bevor es mit dem Siliciumdioxidsol in Kontakt gebracht wird, um den pH-Wert des Ausgangsmaterials auf einen Wert über 6,0 und vorzugsweise zwischen 8 bis 10 einzustellen.

6. Verfahren nach Anspruch 1, wobei das Titanhydroxid- oder Titandioxid-Ausgangsmaterial in einer Form, ausgewählt aus feuchtem Kuchen, wässriger Suspension, Teig oder trockener Form, vorliegt.

7. Verfahren nach Anspruch 1, wobei die Umsetzung bei einer Temperatur im Bereich zwischen Umgebungstemperatur bis Siedepunkt der flüssigen Phase, vorzugsweise im Bereich von 70-100°C durchgeführt wird.

8. Titandioxid, enthaltend nicht mehr als 18% Silicium, berechnet in Bezug auf SiO₂ auf Trockenbasis, bei welchem es sich um eine einzelne Phase mit im Wesentlichen derselben Zusammensetzung bei verschiedenen Punkten, wie bestimmt durch das EDAX-Verfahren, handelt, das einen Oberflächenbereich von größer als 300 m²/g und ein spezifisches Porenvolumen, das mindestens 0,30 cc/g für Poren mit einem Durchmesser von weniger als 100 nm beträgt, aufweist und das zu dem Grad wärmestabil ist, bei welchem es die kristalline Struktur von Anatas nach dem Brennen beibehält.

9. Katalysator, umfassend ein wie in Anspruch 8 definiertes Titandioxid und einen Siliciumdioxidfüllstoff.

10. Katalysator nach Anspruch 9, wobei der Siliciumdioxidfüllstoff Diatomeenerde ist.

11. Katalysator nach Anspruch 9 oder Anspruch 10, wobei der Katalysator ferner ein Bindemittel umfasst.

12. Katalysator nach Anspruch 11, wobei es sich bei dem Bindemittel um eine kolloidale Lösung von Siliciumdioxid oder Hydrogele von Kieselsäure handelt.

13. Katalysator nach Anspruch 9, der in Form von Extrudaten hergestellt ist.

14. Verfahren zum Herstellen eines Titandioxidkatalysators, wobei das Verfahren das Bereitstellen eines Ausgangsmaterials, ausgewählt aus Titandioxid oder Titanhydroxid, das gemäß einem Verfahren nach Anspruch 1 hergestellt ist und nicht mehr als 18% Silicium, berechnet in Bezug auf SiO₂ auf Trockenbasis, enthält, Mischen des Ausgangsmaterials mit einem Siliciumdioxidfüllstoff, Mischen und wahlweise entweder Zugabe von Wasser oder Trocknen auf einen bestimmten Grad unter Bildung eines homogenen Teiges, Formen des Teiges in Formen von gewünschter Gestalt, Trocknen der Formen und Brennen der Formen umfasst.

15. Verfahren nach Anspruch 14, wobei der Siliciumdioxidfüllstoff ausgewählt ist aus Diatomeenerde, gefälltem Siliciumdioxid und Siliciumdioxidhydrogelen.

16. Verfahren nach Anspruch 14, wobei es sich bei dem Ausgangsmaterial um Titandioxid mit einem Oberflächenbereich und einer gut entwickelten Mesoporenstruktur handelt, hergestellt durch:
a) Bereitstellen einer sauren, wässrigen Lösung, enthaltend anorganische Titansalze, und, falls erforderlich, Erhöhen des pH-Werts der Lösung auf einen Wert über 0,02, jedoch unter den Wert, bei welchem eine Ausfällung von Titanhydroxid stattfindet, durch Einbringen eines ersten alkalischen Mittels in die Lösung,
b) Auflösen einer Vorstufe eines alkalischen Mittels in der Lösung und Bewirken dessen, dass die Vorstufe ein zweites alkalisches Mittel bildet und dadurch Titanhydroxid in der Lösung ausfällt und
c) Auftrennen und Waschen des Niederschlags aus Titanhydroxid und Umwandeln desselben zu Titandioxid.

17. Verfahren nach Anspruch 14, ferner umfassend die Zugabe eines Bindemittels zu dem Titan-Ausgangsmaterial und dem Siliciumdioxidfüllstoff.

18. Verfahren nach Anspruch 17, wobei das Bindemittel ausgewählt ist aus einer kolloidalen Lösung von Siliciumdioxid und Hydrogelen von Kieselsäure.

## Revendications

1. Procédé de préparation de dioxyde de titane thermiquement stable, contenant du silicium, lequel procédé comprend les étapes consistant à prendre un matériau de départ qui est de l'hydroxyde de titane ou du dioxyde de titane, à mettre à réagir ledit matériau de départ avec un sol de silice, dans des conditions alcalines qui empêchent la coagulation de particules de silice dans ledit sol, pour obtenir un hydroxyde de titane contenant du silicium ou un dioxyde de titane contenant du silicium, et, dans le cas d'hydroxyde de titane contenant du silicium, à traiter thermiquement celui-ci pour obtenir un dioxyde de titane contenant du silicium.

2. Procédé selon la revendication 1, dans lequel le matériau de départ est un hydroxyde de titane obtenu par un procédé de précipitation qui comprend les étapes suivantes :
a) prendre une solution aqueuse acide contenant des sels inorganiques de titane et, si nécessaire, augmenter le pH de la solution à une valeur supérieure à 0,02 mais inférieure à la valeur à laquelle se produit la précipitation de l'hydroxyde de titane, en introduisant dans ladite solution un premier agent alcalin ;
b) dissoudre dans ladite solution un précurseur d'un agent alcalin, et provoquer la génération par ledit précurseur dudit second agent alcalin et ce faisant faire précipiter l'hydroxyde de titane dans la solution ; et
c) séparer et laver ledit précipité d'hydroxyde de titane.

3. Procédé selon la revendication 2, dans lequel le premier agent alcalin utilisé à l'étape a) est choisi parmi l'ammoniac, les hydroxydes et/ou les carbonates de métaux alcalins ou de métaux alcalino-terreux.

4. Procédé selon la revendication 2, dans lequel le précurseur de l'agent alcalin utilisé à l'étape b) est l'urée, qui, par chauffage, est décomposée pour générer un second agent alcalin qui est l'ammoniac.

5. Procédé selon la revendication 1, dans lequel on choisit les conditions qui empêchent la coagulation de particules de silice dans le sol de silice entre la stabilisation dudit sol de silice avec un agent alcalin ou le traitement du matériau de départ d'hydroxyde de titane ou de dioxyde de titane avec un agent alcalin avant qu'il soit mis en contact avec le sol de silice, pour ajuster le pH dudit matériau de départ à une valeur supérieure à 6,0, et de préférence entre 8 et 10.

6. Procédé selon la revendication 1, dans lequel le matériau de départ d'hydroxyde de titane ou de dioxyde de titane est sous une forme choisie parmi un gâteau de filtre humide, une suspension aqueuse, une forme sèche ou en pâte.

7. Procédé selon la revendication 1, dans lequel on réalise la réaction à une température dans la plage entre la température ambiante et le point d'ébullition de la phase liquide, de préférence dans la plage de 70 à 100 °C.

8. Dioxyde de titane ne contenant pas plus de 18 % de silicium, calculé en termes de SiO₂ sur une base sèche, qui a une phase unique ayant essentiellement la même composition en différents points, telle que déterminée par la méthode EDAX, qui a une aire de surface spécifique supérieure à 300 m²/g, et un volume spécifique de pores qui est d'au moins 0,30 cm³/g pour des pores ayant un diamètre inférieur à 100 nm, et qui est thermiquement stable au point de conserver la structure cristalline de la forme anatase après des calcinations.

9. Catalyseur comprenant un dioxyde de titane thermiquement stable selon la revendication 8 et une charge de silice.

10. Catalyseur selon la revendication 9, dans lequel la charge de silice est de la terre à diatomées.

11. Catalyseur selon la revendication 9 ou la revendication 10, dans lequel le catalyseur comprend en outre un liant.

12. Catalyseur selon la revendication 11, dans lequel le liant est une solution colloïdale de silice ou des hydrogels d'acide silicique.

13. Catalyseur selon la revendication 9 préparé sous la forme d'extrudats.

14. Procédé de préparation de catalyseur dioxyde de titane, lequel procédé consiste à prendre un matériau initial choisi entre le dioxyde de titane ou l'hydroxyde de titane préparé par un procédé selon la revendication 1 et ne contenant pas plus de 18 % de silicium, calculés en termes de SiO₂, sur une base sèche, à mélanger ledit matériau initial avec une charge de silice, à mélanger, et à ajouter éventuellement de l'eau ou à sécher à un certain degré, pour former une pâte homogène, à mettre ladite pâte en forme de pièces de la forme souhaitée et à calciner lesdites pièces.

15. Procédé selon la revendication 14, dans lequel l'on choisit la charge de silice parmi la terre à diatomées, la silice précipitée et les hydrogels de silice.

16. Procédé selon la revendication 14, dans lequel le matériau de départ est du dioxyde de titane ayant une aire de surface élevée et une structure mésopore bien développée, préparé par les opérations consistant à :
a) prendre une solution aqueuse acide contenant des sels inorganiques de titane et, si nécessaire, augmenter le pH de la solution à une valeur supérieure à 0,02 mais inférieure à la valeur à laquelle se produit la précipitation de l'hydroxyde de titane, en introduisant dans ladite solution un premier agent alcalin ;
b) dissoudre dans ladite solution un précurseur d'un agent alcalin, et provoquer la génération par ledit précurseur dudit second agent alcalin. et ce faisant faire précipiter l'hydroxyde de titane dans la solution ; et
c) séparer et laver ledit précipité d'hydroxyde de titane et transformer celui-ci en dioxyde de titane.

17. Procédé selon la revendication 14, comprenant en outre l'ajout d'un liant au matériau de départ de titane et à la charge de silice.

18. Procédé selon la revendication 17, dans lequel l'on choisit le liant entre une solution colloïdale de silice et des hydrogels d'acide silicique.
